# FASCICULE DE BREVET EUROPEEN

(11) **EP 3 387 042 B1**
(45) Date de publication et mention de la délivrance du brevet: **11.05.2022**
(21) Numéro de dépôt: 16825808.5
(22) Date de dépôt: 09.12.2016
(51) Int. Cl.: C08G 69/00, C08J 5/04, C08L 77/06

(54) **PROCEDE POUR UN MATERIAU COMPOSITE DE MATRICE EN POLYAMIDE, RENFORCE FIBRES, A PARTIR DE COMPOSITION PRECURSEUR REACTIVE DE PREPOLYMERE**
VERFAHREN ZUR HERSTELLUNG EINES FASERVERSTÄRKTEN POLYAMIDMATRIXVERBUNDSTOFFES AUS EINER REAKTIVEN PRÄPOLYMERVORLÄUFERZUSAMMENSETZUNG
METHOD FOR PRODUCING A FIBRE-REINFORCED POLYAMIDE MATRIX COMPOSITE MATERIAL, FROM A REACTIVE PREPOLYMER PRECURSOR COMPOSITION

(30) Priorité: 10.12.2015 FR 1562134
(43) Date de publication de la demande: 17.10.2018
(73) Titulaire: Arkema France, 92700 Colombes (FR)
(72) Inventeur: CAPELOT, Mathieu, 27300 Bernay (FR); HOCHSTETTER, Gilles, 94240 L'Hay Les Roses (FR)
(86) Numéro de dépôt international: PCT/FR2016/053294
(87) Numéro de publication internationale: WO 2017/098178

(56) Documents cités:
- EP-A1- 1 988 113
- EP-A1- 1 988 113
- WO-A1-2013/060976
- WO-A1-2013/060976
- WO-A1-2013/178955
- WO-A1-2013/178955
- WO-A1-2014/064375
- WO-A1-2014/064375
- WO-A1-2015/159015
- FR-A1- 3 019 827
- FR-A1- 3 019 827

## Description

La présente invention concerne un procédé de fabrication d'une pièce en matériau composite renforcé fibres (dit également « renfort fibreux » par la suite), lesdites fibres étant des fibres longues de L/D > 1000, de préférence > 2000, dans un moule fermé, de préférence par la technique de moulage par transfert de résine (RTM), en particulier c-RTM (RTM avec compression) ou par la technique RIM (Réaction injection moulage) en particulier S-RIM (RIM structural), plus préférentiellement par c-RTM, en utilisant une composition spécifique réactive à base de prépolymère, ladite composition réactive étant précurseur du polymère final de la matrice thermoplastique qui est un polyamide semi-cristallin ayant une température de transition vitreuse (Tg) élevée et supérieure à 80°C et un point de fusion élevé et inférieur à 280°C, avec une facilité d'imprégnation du substrat fibreux et une facilité de mise en œuvre dudit matériau composite à des températures contrôlées, sans risque de dégradation thermique dudit polymère matrice thermoplastique. Les produits matériaux composites issus de ce procédé sont utilisés dans des applications mécaniques de type pièces de structure dans le domaine de l'automobile, du transport routier, ferroviaire, maritime, aéronautique ou aérospatial ou dans la construction mécanique ou dans le bâtiment ou dans les parcs et loisirs ou pour des renforts de boucliers ou des panneaux de protection contre l'impact projectiles.

EP 0261 020 décrit l'utilisation de prépolymères semi-cristallins réactifs à base de PA 6, 11 et 12 pour la fabrication d'un composite thermoplastique par un procédé de pultrusion. Les prépolymères de structure aliphatique tels que décrits présentent des Tg faibles et des performances mécaniques insuffisantes à chaud.

EP 550 314 décrit, parmi ses exemples, des compositions (non réactives) de copolyamide en cherchant des températures de fusion (Tf) supérieures à 250°C et des Tg limitées avec la plupart des exemples cités ayant une Tg trop basse (< 80°C) ou une Tf trop élevée (> 300°C).

EP 1 988 113 décrit une composition de moulage à base d'un copolyamide 10T/6T avec :
- 40 à 95 % mol. de 10T
- 5 à 40 % mol. de 6T.

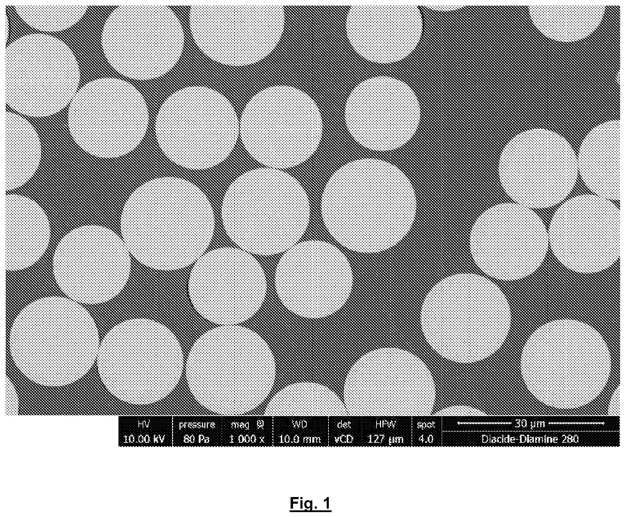

Sont visés en particulier des polyamides de température de fusion élevée et supérieure à 270°C. Les exemples mentionnés et la figure 1 dans ce document nous enseignent que la température de fusion de ces compositions est d'au moins environ 280°C.

WO 2011/003973 décrit des compositions comprenant de 50 à 95 % mol. d'un motif à base d'une diamine aliphatique linéaire comportant de 9 à 12 atomes de carbone et d'acide téréphtalique et de 5 à 50 % de motif associant l'acide téréphtalique à un mélange de 2,2,4 et 2,4,4 triméthylhexanediamine.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes.

WO 2013/060976 décrit un procédé de matériau composite à base d'une composition réactive précurseur comprenant un prépolymère réactif avec des fonctions réactives identiques et un allongeur de chaîne non polymérique porteur de fonctions réactives avec les fonctions dudit prépolymère par polyaddition.

WO 2014/064375 décrit une composition réactive de prépolymère polyamide semi-cristallin, mais dans tous les exemples avec une composition précurseur réactive, l'allongement est réalisé par un allongeur de nature différente par rapport à un prépolymère polyamide.

Le premier inconvénient surmonté par la présente invention par rapport à l'état de la technique concerne une imprégnation améliorée et plus homogène des fibres du renfort fibreux par l'utilisation d'une composition précurseur spécifique pour la matrice polymère semi-cristallin du matériau composite visé et avec des caractéristiques de prépolymères polyamides réactifs utilisés permettant une viscosité suffisamment faible pour une bonne imprégnation et adhérence sur les fibres avec des performances mécaniques qui en résultent plus homogènes et en même temps une bonne réactivité et cinétique de réaction et de cristallisation adaptées au procédé utilisé.

D'autre part, la présente invention permet un bon compromis entre les performances mécaniques et l'aptitude de mise en œuvre (facilité de transformation) à plus basse température. En effet, la solution de la présente invention vise des compositions de polyamide (PA) semi-cristallin permettant une mise en œuvre plus facile à des températures plus basses avec une économie sur le bilan énergétique du procédé de mise en œuvre. En particulier, ceci est permis par l'aptitude à la cristallisation rapide dudit polymère polyamide semi-cristallin par le choix spécifique de sa composition et ceci tout en maintenant à un niveau élevé les performances mécaniques desdits matériaux finaux. Plus particulièrement, les compositions réactives précurseur utilisées par le procédé, selon la présente invention, permettent une meilleure maîtrise de la cinétique de réaction, tout en ayant une vitesse de cristallisation du polymère formé rapide et une vitesse et/ou une température de cristallisation adaptées au procédé utilisé.

Le choix d'un polymère polyamide semi-cristallin comme matrice du matériau composite de l'invention a comme intérêt, par rapport aux polyamides amorphes, des performances mécaniques significativement améliorées, notamment à chaud, telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. Comme pour les amorphes, on recherche une Tg supérieure ou égale à 80°C pour assurer de bonnes propriétés mécaniques au composite sur toute la plage de température d'utilisation, par exemple jusqu'à 90°C pour l'éolien, jusqu'à 100°C pour l'automobile et jusqu'à 120°C pour l'aéronautique. Par contre, un point de fusion trop élevé, en particulier supérieur à 280°C, est néfaste car il nécessite la mise en œuvre du composite à des températures plus élevées avec des contraintes de matériel de moulage à utiliser (et système de chauffe associé) et une surconsommation énergétique avec en plus des risques de dégradation thermique par chauffage à des températures plus élevées que la température de fusion dudit polyamide. Une telle dégradation thermique a comme conséquence la dégradation des propriétés de la matrice thermoplastique finale et donc du matériau composite et pièce composite finale. La cristallinité dudit polymère doit être la plus élevée possible, mais avec une température de fusion Tf pas trop élevée (Tf < 280°C et plus particulièrement ≤ 270°C) pour optimiser les performances mécaniques et la vitesse de cristallisation et/ou la température de cristallisation la plus élevée possible. Ainsi, un choix sélectif de la composition dudit polyamide semi-cristallin permet une mise en œuvre plus facile pour un procédé de mise en œuvre, de préférence dans les conditions de mise en œuvre par RTM (moulage par transfert de résine), en particulier c-RTM (RTM avec compression) ou par la technique RIM, en particulier S-RIM, plus préférentiellement par c-RTM. Donc, l'objet de la présente invention est la mise en œuvre de nouvelles compositions spécifiques de matériau composite thermoplastique, en particulier à base de polyamide semi-cristallin, présentant un bon compromis entre des performances mécaniques élevées (tenue mécanique), en particulier à chaud et une mise en œuvre facile. Cela signifie que la présente invention vise des compositions faciles à mettre en œuvre avec des températures de transformation et de mise en œuvre plus basses que celles pour d'autres compositions de l'état de la technique, avec un bilan énergétique de mise en œuvre globale plus favorable et une productivité plus élevée. Plus particulièrement, la solution de l'invention avec ses compositions réactives spécifiques à base de prépolymères polyamides réactifs semi-cristallins permet, à la fois, une cinétique de réaction maitrisée lors de l'imprégnation et une cinétique de cristallisation rapide. Plus particulièrement, dans des cas spécifiques en fonction de la composition et/ou des conditions spécifiques de mise en œuvre par moulage RTM comme c-RTM ou RIM comme S-RIM, en particulier RTM, elle permet une production de pièces composites moulées avec une cinétique de polymérisation plus lente qu'avec les allongeurs monomériques réactifs par polyaddition. Ceci facilite l'imprégnation des renforts fibreux, tout en permettant un cycle de moulage plus court c'est-à-dire inférieur à 10 min et de préférence inférieur à 5 min, grâce à une cinétique de cristallisation rapide. Une caractéristique particulière de l'invention est que le système réactif est homogène chimiquement, car il ne comprend pas d'allongeur réactif de nature chimique différente de celle du prépolymère, ledit allongeur étant susceptible de désorganiser le polymère final et gêner ainsi sa cristallisation. Plus particulièrement, la matrice polymère polyamide, tout en ayant une Tg élevée et une Tf limitée comme déjà définies, doit avoir également une vitesse de cristallisation élevée. Cette performance peut être caractérisée par l'écart entre la température de fusion Tf et de cristallisation Tc, Tf-Tc qui ne dépasse pas 60°C, de préférence ne dépasse pas 50°C et plus particulièrement ne dépasse pas 40°C. Les performances mécaniques ou tenue mécanique à chaud du composite peuvent être évaluées par la variation du module mécanique entre la température ambiante (23°C) et 100°C avec un maintien d'au moins à 75 % des performances mécaniques, en termes de contrainte à rupture, par rapport à celles à l'ambiante (23°C).

En particulier, les compositions réactives précurseurs à base d'un prépolymère réactif ayant des fonctions réactives identiques et d'un allongeur de chaîne non polymérique porteur de fonctions coréactives avec celles dudit prépolymère polymérisant par polyaddition, selon l'état de la technique, présentent l'inconvénient de conduire à des compositions avec une cinétique de réaction très rapide posant problème lors de l'étape d'imprégnation car, si la polymérisation est trop rapide, l'imprégnation est plus difficile. La solution de la présente invention basée sur l'utilisation de compositions réactives précurseurs à base de prépolymères réactifs (c'est-à-dire sans allongeur non polymérique) comme décrit ci-dessous, polymérisant par polycondensation, permet une cinétique plus lente et maîtrisée lors de l'étape d'imprégnation, permettant ainsi une imprégnation plus facile en particulier dans les conditions de mise en œuvre dudit matériau composite par RTM, en particulier c-RTM (RTM avec compression) ou par la technique RIM, en particulier S-RIM, plus préférentiellement par c-RTM.

En outre, l'utilisation de prépolymère permet de réaliser l'étape de polymérisation après une imprégnation efficace du fait de la viscosité faible de ladite composition précurseur réactive à base de prépolymère avant la polymérisation significative avant cette étape séparée de polymérisation.

Donc, l'objet de l'invention est de mettre au point un procédé de matériau composite avec une composition précurseur à base de prépolymère polyamide spécifique répondant à tous ces besoins.

Le premier objet de l'invention concerne un procédé de fabrication par moulage en moule fermé d'un matériau composite comprenant un renfort fibreux et une matrice thermoplastique polyamide semi-cristallin, ledit procédé comprenant la préparation à l'état fondu de ladite composition réactive précurseur, à base de prépolymère polyamide de composition spécifique, l'imprégnation dudit renfort fibreux par injection dans un moule fermé contenant ledit renfort fibreux de ladite composition réactive à l'état fondu et la polymérisation en masse et à l'état fondu de ladite composition, avec possibilité de post-polymérisation si la polymérisation n'est pas complète et en final un refroidissement et démoulage de ladite pièce en matériau composite ainsi fabriquée, de préférence ledit procédé étant un procédé avec un moulage selon la technique RTM (moulage par transfert de résine). Le terme « résine » dans RTM s'identifie ici à ladite composition réactive précurseur.

L'invention couvre également la pièce en matériau composite obtenue par ledit procédé.

Le premier objet de l'invention concerne donc un procédé de fabrication d'une pièce en matériau composite thermoplastique par moulage en moule fermé, ledit matériau comprenant des fibres de renfort et une matrice thermoplastique polyamide imprégnant lesdites fibres, lesdites fibres étant des fibres longues de L/D > 1000, de préférence > 2000 et que et ladite matrice étant un polyamide semi-cristallin avec une température de transition vitreuse Tg d'au moins 80°C, de préférence d'au moins 90°C et plus préférentiellement d'au moins 100°C et avec une température de fusion Tf étant inférieure ou égale à 280°C et supérieure à 200°C, de préférence supérieure à 220°C, préparé in-situ par polymérisation en masse à l'état fondu par polycondensation, d'une composition précurseur réactive comprenant selon A au moins un premier prépolymère polyamide A1 porteur de deux fonctions identiques X (X et X) ou Y (Y et Y) et au moins un second prépolymère polyamide A2 porteur de deux fonctions identiques X (X et X) ou Y (Y et Y), différentes de celles de A1 et coréactives par rapport à celles de A1 ou d'une composition précurseur comprenant selon B au moins un prépolymère porteur (sur la même chaîne) de deux fonctions différentes X et Y coréactives entre elles ou d'une composition précurseur selon mélange de (A + B), avec lesdites fonctions X et Y étant respectivement carboxy (X) et amine (Y) et inversement (Y et X) et avec ledit procédé comprenant les étapes successives suivantes :
i) préparation du mélange réactif A : (A1 + A2) ou du mélange réactif (A + B) : (A1 + A2 + B) par mélange des composants à l'état fondu ou par fusion dudit prépolymère B si seul composant de ladite composition réactive précurseur, à une température supérieure à celle de la température de fusion Tf du mélange A ou du mélange (A + B) ou de la Tf dudit prépolymère B si seul composant de ladite composition précurseur,
ii) injection dans un moule fermé comprenant lesdites fibres de de ladite composition précurseur réactive à l'état fondu telle qu'obtenue à l'étape i) et imprégnation desdites fibres par ladite composition précurseur réactive à l'état fondu, laquelle est suivant le cas, le mélange A ou (A + B) ou ledit prépolymère B, de préférence avec une viscosité < 100 Pa.s, plus préférentiellement < 50 Pa.s, plus préférablement < 10 Pa.s,
iii) polymérisation in-situ par polycondensation à l'état fondu en masse dans ledit moule fermé et avec une durée et une température de polymérisation contrôlées de sorte que la température de polymérisation soit supérieure à la température de cristallisation Tc dudit polyamide matrice thermoplastique,
iv) en option, refroidissement de ladite pièce en matériau composite,
v) démoulage de ladite pièce,
et avec ledit polyamide final de ladite matrice et lesdits prépolymères A1, A2 ou B ayant la même composition en motifs amides et lesdits motifs amides étant issus de :
a) un composant diacide qui est de 95 à 100 %, de préférence à 100 % en moles de structure téréphtalique avec présence de 0 à 5 % en moles de diacide isophtalique, de préférence a) étant à 100 % le diacide téréphtalique,
b) un composant diamine composé de :
   b1) de 55 à 85 %, de préférence de 55 à 80 % en moles d'une diamine linéaire aliphatique en C₉, C₁₀, C₁₁ ou C₁₂ et
   b2) de 15 à 45 %, de préférence de 20 à 45 % en moles d'une diamine différente de b1), sélectionnée parmi :
      b21) une diamine aliphatique monoramifiée avec substituant méthyle ou éthyle et ayant une différence de longueur de chaîne par rapport à la diamine b1) associée, d'au moins deux carbones, de préférence ladite diamine b2) étant la 2-méthyl pentaméthylène diamine
      b22) la m-xylylène diamine (mXD) ou
      b23) une diamine aliphatique linéaire en C₄ à C₁₈ quand b1) est une diamine aliphatique linéaire en C₁₀ à C₁₂ et avec b23) étant une diamine en C₁₀ à C₁₈ quand ladite diamine b1 est une diamine en C₉,
      b24) la 1,3-bis (aminométhyle) cyclohexyle (1,3 BAC), la 1,4-bis (aminométhyle) cyclohexyle (1,4 BAC) et un mélange de ceux-ci, notamment la 1,3-bis (aminométhyle) cyclohexyle (1,3 BAC),
   et
c) en option, un aminoacide ou suivant le cas le lactame correspondant en C₆ à C₁₂, de préférence en C₆, C₁₁ ou C₁₂ et plus préférentiellement en C₁₁, avec c) représentant pas plus de 30 % en moles par rapport à a) ou par rapport à b), de préférence, ledit procédé étant un procédé RTM (moulage par transfert de résine), en particulier c-RTM ou un procédé RIM, en particulier s-RIM, plus préférentiellement étant un procédé RTM, en particulier c-RTM.

Selon une option plus particulièrement préférée dudit procédé, il s'agit d'un procédé avec une technique de moulage par RTM (moulage par transfert de résine) et plus préférentiellement par c-RTM.

Ledit procédé peut comprendre une étape supplémentaire de post-polymérisation. Ceci est réalisé dans le moule ou hors moule, s'il y a besoin de parfaire la polymérisation dans le cas où la polymérisation de l'étape iii) n'est pas complète, ce qui reste une option possible. De préférence, cette post-polymérisation est réalisée hors moule. Selon une option préférée, il n'y a pas de post-polymérisation.

La température de polymérisation se situe au-dessus de la température de cristallisation Tc du polyamide prépolymère ayant la Tc la plus élevée et de préférence au-dessus d'au moins Tc + 5°C.

Selon une option particulière, la diamine b1) est la 1,10-décaméthylène diamine et la diamine b2) choisie parmi MPMD ou mXD avec a) étant l'acide téréphtalique.

Selon une autre option particulière, la diamine b1) est la 1,10-décaméthylène diamine et la diamine b2) est choisie parmi la 1,3-bis (aminométhyle) cyclohexyle (1,3 BAC), la 1,4-bis (aminométhyle) cyclohexyle (1,4 BAC) et un mélange de ceux-ci, notamment la 1,3-bis (aminométhyle) cyclohexyle (1,3 BAC) avec a) étant l'acide téréphtalique.

De préférence, ledit polyamide comprend b1), b2) et c) et, dans ce cas, le rapport molaire en % de c / (b1+b2) ce qui signifie que c/b varie de 5 à 30 % et de préférence de 10 à 30 %.

Plus préférentiellement, ledit polyamide comprend (dans sa structure unitaire) le composant c) qui est choisi parmi l'amino-11 acide undécanoïque ou l'amino-12 acide laurique ou lauryl lactame.

Encore plus préférentiellement, ledit polyamide de ladite matrice thermoplastique a comme composants (comme lesdits prépolymères A1, A2 et B ont): a) l'acide téréphtalique, b1) la 1,10-décaméthylène diamine, b2) la 1,6-hexaméthylène diamine ou la MPMD ou la mXD ou la 1,3 BAC ou la 1,4 BAC et c) l'amino-11 acide undécanoïque ou l'amino-12 acide laurique ou lauryl lactame.

Plus particulièrement, ledit polyamide (matrice comme prépolymères A1, A2 et B) a comme composants : a) l'acide téréphtalique, b1) la 1,10-décaméthylène diamine, b2) la 1,6-hexaméthylène diamine ou la MPMD ou la mXD ou la 1,3 BAC ou la 1,4 BAC et c) l'amino-11 acide undécanoïque.

Encore plus particulièrement, ledit polyamide (matrice comme prépolymères A1, A2 et B) a comme composants : a) l'acide téréphtalique, b1) la 1,10-décaméthylène diamine, b2) la 1,6-hexaméthylène diamine et c) l'amino-11 acide undécanoïque.

Selon une autre option particulièrement préférée, ledit polyamide a comme composants: a) l'acide téréphtalique, b1) la 1,10-décaméthylène diamine, b2) la 1,6-hexaméthylène diamine et c) l'amino-12 acide undécanoïque.

Dans le cas préféré où ledit composant c) est présent, lesdites compositions réactives de prépolymères (A1 + A2), B ou (A1 + A2 + B) selon l'invention permettent une viscosité à l'état fondu plus faible par rapport aux mêmes compositions sans c), à masse moléculaire comparable. Ceci permet une amélioration significative de l'imprégnation dudit renfort fibreux. Alternativement, pour une viscosité à l'état fondu constante, la présence de c) permet d'avoir des masses moléculaires de prépolymère plus élevées.

Plus particulièrement, le taux molaire de b1 / (b1+b2) varie de 55 à 75 % et le taux molaire de b2 / (b1+b2) varie de 25 à 45 %.

Selon une variante particulière, ladite composition précurseur réactive comprend au moins une nanocharge d'origine carbonique choisie parmi : noir de carbone, graphènes, nanofibrilles de carbone et nanotubes de carbone, ladite nanocharge étant ajoutée sous forme préalablement dispersée dans le constituant le plus fluide.

Le procédé de l'invention concerne en particulier et de manière préférée un procédé avec une technique de moulage par RTM et plus particulièrement il s'agit d'un procédé avec une technique de moulage par c-RTM (RTM compression).

Selon une option particulière et préférée, ladite composition précurseur, telle que définie ci-haut, peut comprendre en plus desdits prépolymères, un additif qui absorbe le rayonnement d'un laser UV à une longueur d'onde spécifique ou d'un chauffage IR ou d'un chauffage par micro-onde ou d'un chauffage par induction pour les besoins de réchauffage dudit matériau composite (pièce composite), avant une opération de transformation complémentaire, en particulier par thermo-estampage, soit par surmoulage.

Concernant lesdites fibres dudit renfort fibreux, ce sont des fibres longues de L/D > 1000, de préférence > 2000 (L étant la longueur et D le diamètre desdites fibres). De préférence, lesdites fibres sont sélectionnées parmi les fibres minérales, de préférence de verre, de carbone ou de basalte, en particulier de verre et de carbone ou parmi les synthétiques, de préférence les fibres d'aramides ou de polyaryl éther cétones. Lesdites fibres peuvent représenter des taux de 45 à 75 % en volume dudit matériau composite, de préférence de 50 à 70 %.

Plus particulièrement, le procédé de l'invention concerne la fabrication d'une pièce de structure à base dudit matériau composite. Encore plus particulièrement, ladite pièce est une pièce dans le domaine du transport routier, ferroviaire, maritime, aéronautique ou aérospatial ou dans la construction mécanique ou dans le bâtiment ou dans les parcs et loisirs ou pour faire un renfort de boucliers ou de panneaux de protection contre l'impact projectiles. En particulier, ladite pièce de structure peut être une pièce automobile, éventuellement insérée dans une structure métallique comme la caisse en blanc d'un véhicule, éventuellement soumise (avec ladite pièce composite insérée) à un cycle de traitement thermochimique par cataphorèse. Ceci signifie que lesdites pièces composites pour cette utilisation doivent résister aux conditions de traitement par cataphorèse. En particulier, une Tf élevée de ladite pièce permet un tel traitement.

Plus particulièrement, la différence Tf-Tc entre la température de fusion Tf et la température de cristallisation Tc dudit polymère (polyamide) matrice ne dépasse pas 60°C, de préférence ne dépasse pas 50°C et plus particulièrement ne dépasse pas 40°C.

Selon une option particulière, l'enthalpie de cristallisation dudit polymère de matrice, mesurée en Calorimétrie Différentielle à Balayage (DSC) selon la Norme ISO 11357-3:2013 est supérieure à 40 J/g, de préférence supérieure à 45 J/g.

Lesdits prépolymères A1, A2 et B, comme définis ci-haut, ont une masse moléculaire moyenne en nombre Mn allant de 500 à 10000, de préférence de 750 à 6000, plus préférentiellement de 750 à 3000. Toutes les masses Mn sont déterminées par le calcul à partir du taux des fonctions terminales déterminé par titration potentiométrique en solution et la fonctionnalité desdits prépolymères. Lesdits prépolymères polyamides peuvent être préparés selon les méthodes telles que décrites dans les exemples de prépolymères réactifs dans WO 2014/064375.

Concernant les différents paramètres définis selon l'invention, leur détermination est réalisée comme expliqué à la suite ci-dessous.

La viscosité à l'état fondu du prépolymère ou de la composition précurseur est mesurée suivant le manuel de référence du constructeur de l'appareil de mesure utilisé qui est un rhéomètre Physica MCR301, sous balayage d'azote à la température donnée sous cisaillement de 1 s⁻¹, entre deux plans parallèles de diamètre de 50 mm.

La Mn du prépolymère ou du polymère thermoplastique est déterminée à partir de la titration (dosage) des fonctions terminales selon une méthode potentiométrique (dosage direct pour NH₂ ou COOH) et à partir de la fonctionnalité théorique qui est de 2 (en fonctions terminales) pour prépolymères et polymères linéaires préparés à partir de monomères bifonctionnels seuls.

La mesure de la viscosité intrinsèque ou inhérente est réalisée dans le m-crésol. La méthode est bien connue de l'homme du métier. On suit la norme ISO 307:2007 mais en changeant le solvant (utilisation du m-crésol à la place de l'acide sulfurique, la température (20°C), et la concentration (0.5% massique).

La température de transition vitreuse Tg des polymères thermoplastiques utilisés est mesurée à l'aide d'un calorimètre différentiel à balayage (DSC), après un deuxième passage en chauffe, suivant la norme ISO 11357-2:2013. La vitesse de chauffage et de refroidissement est de 20°C/min.

La température de fusion Tf et la température de cristallisation Tc sont mesurées par DSC, après une première chauffe, selon la norme ISO 11357-3:2013. La vitesse de chauffage et de refroidissement est de 20°C/min.

L'enthalpie de cristallisation dudit polymère de matrice est mesurée en Calorimétrie Différentielle à Balayage (DSC) selon la norme ISO 11357-3:2013.

De préférence, ladite composition précurseur réactive comprend au moins une nanocharge d'origine carbonique choisie parmi : noir de carbone, graphènes, nanofibrilles de carbone et nanotubes de carbone, ladite nanocharge étant ajoutée sous forme préalablement dispersée dans le constituant le plus fluide.

Un autre objet de l'invention concerne une pièce en matériau composite obtenue par un procédé tel que défini ci-haut selon l'invention ou en utilisant une composition précurseur telle que définie ci-haut selon l'invention.

Plus particulièrement, l'invention couvre une pièce en matériau composite obtenue selon le procédé tel que défini ci-dessus selon l'invention, avec ladite pièce étant une pièce de structure dans le domaine de l'automobile, du transport routier, ferroviaire, maritime, aéronautique ou aérospatial ou dans la construction mécanique ou dans le bâtiment ou dans les parcs et loisirs ou pour des renforts de boucliers ou de panneaux de protection contre l'impact projectiles.

### DESCRIPTION DES FIGURES

La figure 1 présente une photo prise au microscope électronique à balayage de fibres de verre tissées (Tissu tissé en taffetas, à 600g/m², à partir de fibre de verre Advantex^{®} de 3B, ensimage SE4535) imprégnées avec les oligomères 1 et 2 selon le procédé de l'invention.

### EXEMPLES

### Méthodes de détermination des caractéristiques citées

- La titration (dosage) des fonctions terminales est réalisée selon une méthode potentiométrique (dosage direct pour NH₂ ou COOH).
- La température de transition vitreuse Tg est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La température de fusion Tf et la température de cristallisation Tc sont mesurées par DSC, selon la norme ISO 11357-3 :2013. La vitesse de chauffage et de refroidissement est de 20°C/min.
- L'enthalpie de fusion dudit polymère de matrice est mesurée en Calorimétrie Différentielle à Balayage (DSC), après un deuxième passage en chauffe, selon la norme ISO 11357-3 :2013.
- Les images de morphologie sont obtenues par microscopie électronique à balayage, après découpe de l'échantillon dans le sens transverse des fibres et préparation de l'échantillon par polissage ionique.

### Préparation d'oligomères fonctionnalisées :

Le mode opératoire suivant est un exemple de procédé de préparation, et n'est bien sûr pas limitatif.

Dans un réacteur autoclave de 14 litres, on introduit 5 kg des matières premières suivantes :
- 500 g d'eau,
- la ou les diamines,
- l'aminoacide (éventuellement),
- le ou les diacides,
- 35 g d'hypophosphite de sodium en solution,
- 0,1 g d'un antimousse WACKER AK1000 (société Wacker Silicones).

Le réacteur fermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

L'oligomère (prépolymère) est ensuite vidangé par la vanne de fond puis refroidi dans un bac d'eau puis broyé.

La nature et rapport molaire du motif et structure moléculaire du polyamide exemplifié, ainsi que ses principales caractéristiques, sont donnés dans le tableau 1 ci- dessous.

**Tableau 1 : Caractéristiques des oligomères fonctionnalisés synthétisés**

| | Structure moléculaire et composition molaire | Fonction | Tf °*C* | Tg °*C* | Tc °C | ΔH *J*/*g* | Indice d'acide *eq*/*T* | Indice d'amine *eq*/*T* |
|---|---|---|---|---|---|---|---|---|
| Oligomère | 11/6T/10T | NH₂ | 269,2 | 81,7 | 234, 8 | 69,8 | 0 | 620 |
| | 16/24/60 | | | | | | | |
| 1 | | | | | | | | |
| Oligomère 2 | 11/6T/10T | COOH | 263,3 | 97 | 228 | 56 | 711 | 0 |
| | 9,1/27,3/63,6 | | | | | | | |

### Exemple 1 :

Un essai de c-RTM est réalisé à partir des deux oligomères 1 et 2, mélangés à l'aide d'un mélangeur statique de type Sulzer dans un ratio massique 50/50, dans un moule chauffé à 280°C contenant 4 plis de fibres de verre tissées. Les deux polymères sont fondus au préalable dans des pots indépendants chauffés à 280°C. Un léger vide est appliqué afin d'extraire tout air des pots avant la fusion et l'injection. Une fois le vide fait dans le moule, l'aspiration permettant de faire le vide est coupée avant injection et une vanne à l'entrée du moule permet de maintenir le moule sous vide même lorsque l'aspiration est coupée. Après injection et compression, le moule est refroidi à l'air libre et la pièce obtenue est retirée du moule à 180°C.

L'état d'imprégnation des fibres est excellent, et aucune fissure n'est détectée, comme le montre la Figure 1.

## Revendications

1. Procédé de fabrication d'une pièce en matériau composite thermoplastique par moulage en moule fermé, ledit matériau comprenant des fibres de renfort et une matrice thermoplastique polyamide imprégnant lesdites fibres, **caractérisé en ce que** lesdites fibres sont des fibres longues de L/D > 1000, de préférence > 2000 et que ladite matrice est un polyamide semi-cristallin avec une température de transition vitreuse Tg d'au moins 80°C, de préférence d'au moins 90°C et plus préférentiellement d'au moins 100°C et avec une température de fusion Tf inférieure ou égale à 280°C et supérieure à 200°C, de préférence supérieure à 220°C, préparé in-situ par polymérisation en masse à l'état fondu par polycondensation, d'une composition précurseur réactive comprenant selon A au moins un premier prépolymère polyamide A1 porteur de deux fonctions identiques X (X et X) ou Y (Y et Y) et au moins un second prépolymère polyamide A2 porteur de deux fonctions identiques X (X et X) ou Y (Y et Y), différentes de celles de A1 et coréactives par rapport à celles de A1 ou d'une composition précurseur comprenant selon B au moins un prépolymère porteur (sur la même chaîne) de deux fonctions différentes X et Y coréactives entre elles ou d'une composition précurseur selon mélange de (A + B), avec lesdites fonctions X et Y étant respectivement carboxy (X) et amine (Y) et inversement (Y et X) et **en ce que** ledit procédé comprend les étapes successives suivantes :
i) préparation du mélange réactif A : (A1 + A2) ou du mélange réactif (A + B) : (A1 + A2 + B) par mélange des composants à l'état fondu ou fusion dudit prépolymère B si seul composant de ladite composition réactive précurseur, à une température supérieure à celle de la température de fusion Tf du mélange A ou du mélange (A + B) ou de la Tf dudit prépolymère B si seul composant de ladite composition précurseur,
ii) injection dans un moule fermé comprenant lesdites fibres de de ladite composition précurseur réactive à l'état fondu telle qu'obtenue à l'étape i) et imprégnation desdites fibres par ladite composition précurseur réactive à l'état fondu, laquelle est suivant le cas, A ou (A + B) ou ledit prépolymère B, de préférence avec une viscosité < 100 Pa.s, plus préférentiellement < 50 Pa.s, plus préférablement < 10 Pa.s,
iii) polymérisation in-situ par polycondensation à l'état fondu en masse dans ledit moule fermé et avec une durée et une température de polymérisation contrôlées de sorte que la température de polymérisation soit supérieure à la température de cristallisation Tc dudit polyamide matrice thermoplastique,
iv) en option, refroidissement de ladite pièce en matériau composite,
v) démoulage de ladite pièce,
et avec ledit polyamide final de ladite matrice et lesdits prépolymères A1, A2 ou B ayant la même composition en motifs amides et lesdits motifs amides étant issus de :
a) un composant diacide qui est de 95 à 100 %, de préférence à 100 % en moles de structure téréphtalique avec présence de 0 à 5 % en moles de diacide isophtalique, de préférence a) étant à 100 % le diacide téréphtalique,
b) un composant diamine composé de :
b1) de 55 à 85 %, de préférence de 55 à 80 % en moles d'une diamine linéaire aliphatique en C₉, C₁₀, C₁₁ ou C₁₂ et
b2) de 15 à 45 %, de préférence de 20 à 45 % en moles d'une diamine différente de b1), sélectionnée parmi :
b21) une diamine aliphatique monoramifiée avec substituant méthyle ou éthyle et ayant une différence de longueur de chaîne par rapport à la diamine b1) associée, d'au moins deux carbones, de préférence ladite diamine b2) étant la 2-méthyl pentaméthylène diamine
b22) la m-xylylène diamine (mXD) ou
b23) une diamine aliphatique linéaire en C₄ à C₁₈ quand b1) est une diamine aliphatique linéaire en C₁₀ à C₁₂ et avec b23) étant une diamine en C₁₀ à C₁₈ quand ladite diamine b1 est une diamine en C₉,
b24) la 1,3-bis (aminométhyle) cyclohexyle (1,3 BAC), la 1,4-bis (aminométhyle) cyclohexyle (1,4 BAC) et un mélange de ceux-ci, notamment la 1,3-bis (aminométhyle) cyclohexyle (1,3 BAC),
et
c) en option, un aminoacide ou suivant le cas le lactame correspondant en C₆ à C₁₂, de préférence en C₆, C₁₁ ou C₁₂ et plus préférentiellement en C₁₁, avec c) représentant pas plus de 30 % en moles par rapport à a) ou par rapport à b),
de préférence, ledit procédé étant un procédé RTM (moulage par transfert de résine), en particulier c-RTM ou un procédé RIM, en particulier s-RIM, plus préférentiellement étant un procédé RTM, en particulier c-RTM.

2. Procédé selon la revendication 1, **caractérisé en ce qu'**il s'agit d'un procédé RTM (moulage par transfert de résine).

3. Procédé selon la revendication 1 ou 2, **caractérisé en ce qu'**il comprend une étape supplémentaire de post-polymérisation.

4. Procédé selon l'une des revendications 1 à 3, **caractérisé en ce que** ledit polyamide comprend b1), b2) et c) et que le rapport molaire en % de c / (b1+b2) varie de 5 à 30 % et de préférence de 10 à 30 %.

5. Procédé selon l'une des revendications 1 à 4, **caractérisé en ce que** ledit polyamide comprend c) choisi parmi l'amino-11 acide undécanoïque ou l'amino-12 acide laurique ou lauryl lactame.

6. Procédé selon l'une des revendications 1 à 5, **caractérisé en ce que** ledit polyamide a comme composants a) l'acide téréphtalique, b1) la 1,10-décaméthylène diamine, b2) la 1,6-hexaméthylène diamine ou la 2-méthyl pentaméthylène diamine (MPMD) ou la mXD ou la 1,3 BAC ou la 1,4 BAC et c) l'amino-11 acide undécanoïque ou l'amino-12 acide laurique ou lauryl lactame.

7. Procédé selon l'une des revendications 1 à 6, **caractérisé en ce que** ledit polyamide a comme composants a) l'acide téréphtalique, b1) la 1,10-décaméthylène diamine, b2) la 1,6-hexaméthylène diamine et c) l'amino-11 acide undécanoïque.

8. Procédé selon l'une des revendications 1 à 6, **caractérisé en ce que** ledit polyamide a comme composants a) l'acide téréphtalique, b1) la 1,10-décaméthylène diamine, b2) la 1,6-hexaméthylène diamine et c) l'amino-12 acide undécanoïque.

9. Procédé selon l'une des revendications 1 à 5, **caractérisé en ce que** b1) est la 1,10-décaméthylène diamine et b2) est choisie parmi la 2-méthyl pentaméthylène diamine (MPMD) ou mXD ou la 1,3 BAC ou la 1,4 BAC et a) est l'acide téréphtalique.

10. Procédé selon l'une des revendications 1 à 9, **caractérisé en ce que** le taux molaire de b1 / (b1+b2) varie de 55 à 75 % et que le taux molaire de b2 / (b1+b2) varie de 25 à 45%.

11. Procédé selon l'une des revendications 1 à 10, **caractérisé en ce que** ladite composition précurseur réactive comprend au moins une nanocharge d'origine carbonique choisie parmi : noir de carbone, graphènes, nanofibrilles de carbone et nanotubes de carbone, ladite nanocharge étant ajoutée sous forme préalablement dispersée dans le constituant le plus fluide.

12. Procédé selon l'une des revendications 1 à 11, **caractérisé en ce qu'**il s'agit d'un procédé c-RTM (RTM avec compression).

13. Procédé selon l'une des revendications 1 à 12, **caractérisé en ce que** ladite composition précurseur comprend en plus desdits prépolymères un additif qui absorbe le rayonnement d'un laser UV à une longueur d'onde spécifique ou d'un chauffage IR ou d'un chauffage par micro-onde ou d'un chauffage par induction pour les besoins de réchauffage dudit composite, avant une opération de transformation complémentaire, en particulier par thermo estampage ou par surmoulage.

14. Procédé selon l'une des revendications 1 à 13, **caractérisé en ce que** lesdites fibres sont sélectionnées parmi les fibres minérales, de préférence de verre, de carbone ou de basalte, en particulier de verre ou de carbone ou parmi les synthétiques, de préférence les fibres d'aramides ou de polyaryl éther cétones.

15. Procédé selon l'une des revendications 1 à 14, **caractérisé en ce qu'**il concerne la fabrication d'une pièce de structure à base dudit matériau composite.

16. Procédé selon la revendication 15, **caractérisé en ce que** ladite pièce est une pièce dans le domaine du transport routier, ferroviaire, maritime, aéronautique ou aérospatial ou dans la construction mécanique ou dans le bâtiment ou dans les parcs et loisirs ou pour faire un renfort de boucliers ou de panneaux de protection contre l'impact projectiles.

17. Procédé selon l'une des revendications 15 ou 16, **caractérisé en ce que** ladite pièce de structure est une pièce automobile, éventuellement insérée dans une structure métallique comme la caisse en blanc d'un véhicule, éventuellement soumise à un cycle de traitement thermochimique par cataphorèse.

18. Pièce moulée en matériau composite, **caractérisée en ce qu'**elle est obtenue par un procédé tel que défini selon l'une des revendications 1 à 17 ou en utilisant une composition précurseur telle que définie selon la revendication 1 à 17.

19. Pièce selon la revendication 18, **caractérisée en ce qu'**il s'agit d'une pièce de structure dans le domaine de l'automobile, du transport routier, ferroviaire, maritime, aéronautique ou aérospatial ou dans la construction mécanique ou dans le bâtiment ou dans les parcs et loisirs ou pour des renforts de boucliers ou de panneaux de protection contre l'impact projectiles.

## Patentansprüche

1. Verfahren zur Herstellung eines Teils aus thermoplastischem Verbundmaterial durch Formen in einer geschlossenen Form, wobei das Material Verstärkungsfasern und eine thermoplastische Polyamidmatrix umfasst, die die Fasern imprägniert, **dadurch gekennzeichnet, dass** die Fasern lange Fasern mit einem L/D > 1000, vorzugsweise > 2000, sind und dass die Matrix ein halbkristallines Polyamid mit einer Glasübergangstemperatur Tg von mindestens 80 °C, vorzugsweise mindestens 90 °C und stärker bevorzugt mindestens 100 °C und mit einer Schmelztemperatur Tf von höchstens 280 °C und über 200 °C, vorzugsweise über 220 °C, ist, hergestellt in-situ durch Massenpolymerisation in der Schmelze durch Polykondensation aus einer reaktiven Vorläuferzusammensetzung, die gemäß A mindestens ein erstes Polyamidpräpolymer A1, das zwei identische Funktionen X (X und X) oder Y (Y und Y) aufweist, und mindestens ein zweites Polyamidpräpolymer A2, das zwei identische Funktionen X (X und X) oder Y (Y und Y) aufweist, die von denen von A1 verschieden sind und in Bezug auf die von A1 koreaktiv sind, enthält, oder aus einer Vorläuferzusammensetzung, die gemäß B mindestens ein Präpolymer enthält, das (an derselben Kette) zwei verschiedene Funktionen X und Y aufweist, die untereinander koreaktiv sind, oder aus einer Vorläuferzusammensetzung gemäß der Mischung von (A + B), wobei die Funktionen X und Y jeweils Carboxy (X) und Amin (Y) und umgekehrt (Y und X) sind, **und dadurch, dass** das Verfahren die folgenden aufeinanderfolgenden Schritte umfasst:
(i) Herstellen der reaktiven Mischung A: (A1 + A2) oder der reaktiven Mischung (A + B): (A1 + A2 + B) durch Mischen der Komponenten in geschmolzenem Zustand oder Schmelzen des Präpolymers B, sofern einzige Komponente der reaktiven Vorläuferzusammensetzung, bei einer Temperatur, die höher ist als die der Schmelztemperatur Tf der Mischung A oder der Mischung (A + B) oder der Tf des Präpolymers B, sofern einzige Komponente der Vorläuferzusammensetzung,
ii) Einspritzen der in Schritt i) erhaltenen in der Schmelze reaktiven Vorläuferzusammensetzung in eine die Fasern umfassende geschlossene Form und Imprägnieren der Fasern mit der in der Schmelze reaktiven Vorläuferzusammensetzung, die, je nach Fall, A oder (A + B) oder das Präpolymer B ist, vorzugsweise mit einer Viskosität < 100 Pa.s, stärker bevorzugt < 50 Pa.s, noch stärker bevorzugt < 10 Pa.s,
iii) In-Situ-Polymerisation durch Massenpolykondensation in Schmelz in der geschlossenen Form und mit einer derart gesteuerten Polymerisationsdauer und -temperatur, dass die Polymerisationstemperatur höher ist als die Kristallisationstemperatur Tc des thermoplastischen Matrixpolyamids,
iv) optional Kühlen des Teils aus Verbundmaterial,
v) Entformen des Teils,
und wobei das endgültige Polyamid der Matrix und die Präpolymere A1, A2 oder B die gleiche Zusammensetzung in Amideinheiten aufweisen und die Amideinheiten abgeleitet sind von:
a) einer Disäurekomponente, die zu 95 bis 100 Mol-%, vorzugsweise zu 100 Mol-%, terephthalischer Struktur in Gegenwart von 0 bis 5 Mol-% Isophthalsäure ist, wobei a) vorzugsweise zu 100 % Terephthalsäure ist,
b) einer Diaminkomponente, bestehend aus:
b1) zu 55 bis 85 Mol-%, vorzugsweise zu 55 bis 80 Mol-%, einem aliphatischen linearen C₉-, C₁₀-, C₁₁- oder C₁₂-Diamin und
b2) zu 15 bis 45 %, vorzugsweise zu 20 bis 45 Mol-%, einem von b1) verschiedenen Diamin, ausgewählt aus:
b21) einem monoramifizierten aliphatischen Diamin mit Methyl- oder Ethylsubstituenten und mit einer Kettenlängendifferenz zum entsprechenden Diamin b1) von mindestens zwei Kohlenstoffen, wobei es sich bei dem Diamin b2) vorzugsweise um 2-Methylpentamethylendiamin handelt,
b22) m-Xylylendiamin (mXD) oder
b23) einem linearen aliphatischen C₄- bis C₁₈-Diamin, wenn b1) ein lineares aliphatisches C₁₀- bis C₁₂-Diamin ist, und wobei b23) ein C₁₀- bis C₁₈-Diamin ist, wenn das Diamin b1 ein C₉-Diamin ist,
b24) 1,3-Bis(aminomethyl)cyclohexyl (1,3-BAC), 1,4-Bis(aminomethyl)cyclohexyl (1,4-BAC) und einer Mischung von diesen, insbesondere 1,3-Bis(aminomethyl)cyclohexyl (1,3-BAC),
und
c) wahlweise einer Aminosäure oder je nach Fall dem entsprechenden C₆-bis C₁₂-, vorzugsweise C₆-, C₁₁- oder C₁₂- und stärker bevorzugt C₁₁-Lactam, wobei c) nicht mehr als 30 Mol-% bezogen auf a) oder auf b) ausmacht,
wobei das Verfahren vorzugsweise ein RTM- (Resin Transfer Molding-Verfahren), insbesondere c-RTM-Verfahren, oder ein RIM-, insbesondere s-RIM-Verfahren, stärker bevorzugt ein RTM-, insbesondere c-RTM-Verfahren, ist.

2. Verfahren nach Anspruch 1, **dadurch gekennzeichnet, dass** es sich um ein RTM-Verfahren (Resin Transfer Molding-Verfahren) handelt.

3. Verfahren nach Anspruch 1 oder 2, **dadurch gekennzeichnet, dass** es einen zusätzlichen Nachpolymerisationsschritt umfasst.

4. Verfahren nach einem der Ansprüche 1 bis 3, **dadurch gekennzeichnet, dass** das Polyamid b1), b2) und c) umfasst und dass das Molverhältnis in % von c / (b1+b2) von 5 bis 30 % und vorzugsweise von 10 bis 30 % variiert.

5. Verfahren nach einem der Ansprüche 1 bis 4, **dadurch gekennzeichnet, dass** das Polyamid c) umfasst, das aus Amino-11-Undecansäure oder Amino-12-Laurinsäure oder Lauryllactam ausgewählt ist.

6. Verfahren nach einem der Ansprüche 1 bis 5, **dadurch gekennzeichnet, dass** das Polyamid als Komponenten a) Terephthalsäure, b1) 1,10-Decamethylendiamin, b2) 1,6-Hexamethylendiamin oder 2-Methylpentamethylendiamin (MPMD) oder mXD oder 1,3-BAC oder 1,4-BAC und c) 11-Amino-Undecansäure oder 12-Amino-Laurinsäure oder Lauryllactam aufweist.

7. Verfahren nach einem der Ansprüche 1 bis 6, **dadurch gekennzeichnet, dass** das Polyamid als Komponenten a) Terephthalsäure, b1) 1,10-Decamethylendiamin, b2) 1,6-Hexamethylendiamin und c) Amino-11-Unecansäure aufweist.

8. Verfahren nach einem der Ansprüche 1 bis 6, **dadurch gekennzeichnet, dass** das Polyamid als Komponenten a) Terephthalsäure, b1) 1,10-Decamethylendiamin, b2) 1,6-Hexamethylendiamin und c) Amino-12-undecansäure aufweist.

9. Verfahren nach einem der Ansprüche 1 bis 5, **dadurch gekennzeichnet, dass** b1) 1,10-Decamethylendiamin ist und b2) ausgewählt ist aus 2-Methylpentamethylendiamin (MPMD) oder mXD oder 1,3-BAC oder 1,4-BAC und a) Terephthalsäure ist.

10. Verfahren nach einem der Ansprüche 1 bis 9, **dadurch gekennzeichnet, dass** die Molrate von b1 / (b1+b2) von 55 bis 75 % variiert und dass die Molrate von b2 / (b1+b2) von 25 bis 45 % variiert.

11. Verfahren nach einem der Ansprüche 1 bis 10, **dadurch gekennzeichnet, dass** die reaktive Vorläuferzusammensetzung mindestens einen Nanofüllstoff kohlenstoffhaltigen Ursprungs umfasst, der ausgewählt ist aus: Ruß, Graphenen, Kohlenstoffnanofibrillen und Kohlenstoffnanoröhren, wobei der Nanofüllstoff in zuvor dispergierter Form in den flüssigsten Bestandteil zugegeben wird.

12. Verfahren nach einem der Ansprüche 1 bis 11, **dadurch gekennzeichnet, dass** es sich um ein c-RTM-Verfahren (RTM-Verfahren mit Kompression) handelt.

13. Verfahren nach einem der Ansprüche 1 bis 12, **dadurch gekennzeichnet, dass** die Vorläuferzusammensetzung zusätzlich zu den Präpolymeren ein Additiv umfasst, das die Strahlung eines UV-Lasers mit einer bestimmten Wellenlänge oder einer IR-Heizung oder einer Mikrowellenheizung oder einer Induktionsheizung zu Zwecken der Erwärmung des Verbundstoffs vor einem zusätzlichen Verarbeitungsschritt, insbesondere durch Thermoprägen oder Umspritzen, absorbiert.

14. Verfahren nach einem der Ansprüche 1 bis 13, **dadurch gekennzeichnet, dass** die Fasern aus Mineral-, vorzugsweise aus Glas-, Kohlenstoff- oder Basalt-, insbesondere aus Glas- oder Kohlenstofffasern, oder aus Synthetikfasern, vorzugsweise aus Aramid- oder Polyaryletherketonfasern, ausgewählt werden.

15. Verfahren nach einem der Ansprüche 1 bis 14, **dadurch gekennzeichnet, dass** es die Herstellung eines Konstruktionsteils auf der Basis des genannten Verbundmaterials betrifft.

16. Verfahren nach Anspruch 15, **dadurch gekennzeichnet, dass** das Teil ein Teil im Bereich des Straßen-, Schienen-, Seeverkehrs, in Luft- oder Raumfahrt oder im Maschinenbau oder im Bauwesen oder in Parks und Freizeiteinrichtungen oder zum Herstellen einer Verstärkung von Schilden oder Platten als Schutz gegen den Einschlag von Projektilen ist.

17. Verfahren nach einem der Ansprüche 15 oder 16, **dadurch gekennzeichnet, dass** das Konstruktionsteil ein Kraftfahrzeugteil ist, das gegebenenfalls in eine Metallkonstruktion wie die Rohkarosse eines Fahrzeugs eingefügt ist und gegebenenfalls einem thermochemischen Behandlungszyklus durch Kataphorese unterzogen wird.

18. Formteil aus Verbundmaterial, **dadurch gekennzeichnet, dass** es durch ein Verfahren, wie in einem der Ansprüche 1 bis 17 definiert, oder unter Verwendung einer Vorläuferzusammensetzung, wie in Anspruch 1 bis 17 definiert, erhalten wird.

19. Teil nach Anspruch 18, **dadurch gekennzeichnet, dass** es sich um ein Konstruktionsteil im Bereich Kraftfahrzeug, Straßen-, Schienen-, Seeverkehr, Luft- und Raumfahrt oder Maschinenbau oder Bauwesen oder in Parks und Freizeiteinrichtungen oder für Verstärkungen von Schilden oder Platten zum Schutz gegen den Einschlag von Projektilen handelt.

## Claims

1. A method for manufacturing a part made of a thermoplastic composite material by closed molding, said material comprising reinforcing fibers and a polyamide thermoplastic matrix impregnating said fibers, **characterized in that** said fibers are long fibers of L/D > 1000, preferably > 2000, and **in that** said matrix is a semicrystalline polyamide with a glass transition temperature Tg of at least 80°C, preferably at least 90°C, and more preferentially at least 100°C, and with a melting temperature Tm less than or equal to 280°C and greater than 200°C, preferably greater than 220°C, prepared in-situ by bulk polymerization in the molten state by polycondensation, of a reactive precursor composition comprising according to A at least one first polyamide prepolymer A1 bearing two identical functional groups X (X and X) or Y (Y and Y) and at least one second polyamide prepolymer A2 bearing two identical functional groups X (X and X) or Y (Y and Y), different from those of A1 and co-reactive with respect to those of A1 or of a precursor composition comprising according to B at least one prepolymer carrying (on the same chain) two different functions X and Y which are co-reactive with each other, or of a precursor composition according to a mixture of (A + B), with the said functions X and Y being respectively carboxyl (X) and amine (Y) and vice versa (Y and X), and **in that** said method comprises the following successive steps:
i) preparation of the reactive mixture A: (A1 + A2) or of the reactive mixture (A + B): (A1 + A2 + B) by melt blending the components or melting said prepolymer B if it is the only component of said reactive precursor composition, at a temperature greater than that of the melting temperature Tm of the mixture A or of the mixture (A + B) or of the Tm of said prepolymer B if it is the only component of said precursor composition,
ii) injecting into a closed mold comprising said fibers of said reactive precursor composition in the molten state as obtained in step i) and impregnating said fibers with said reactive precursor composition in the molden state, which is, as the case may be, A or (A + B) or said prepolymer B, preferably with a viscosity < 100 Pa.s, more preferentially < 50 Pa.s, more preferentially < 10 Pa.s,
iii) in-situ polymerization by bulk polycondensation in the molten state in said closed mold and with a controlled polymerization time and temperature such that the polymerization temperature is above the crystallization temperature Tc of said thermoplastic matrix polyamide,
iv) optionally, cooling said composite material part,
v) removing said part from the mold,
and with said final polyamide of said matrix and said prepolymers A1, A2 or B having the same amide unit composition and said amide units being derived from:
a) a diacid component which is 95 to 100 mol%, preferably 100 mol% of terephthalic structure with the presence of 0 to 5 mol% of isophthalic diacid, preferably a) being 100% the terephthalic diacid
b) a diamine component composed of:
b1) from 55 to 85 mol%, preferably from 55 to 80 mol% of a C₉, C₁₀, C₁₁ or C₁₂ aliphatic linear diamine and
b2) from 15 to 45 mol%, preferably from 20 to 45 mol% of a diamine different from b1), selected from:
b21) a mono-branched aliphatic diamine with methyl or ethyl substituent and having a chain length difference relative to the associated diamine b1) of at least two carbons, said diamine b2) preferably being 2-methyl pentamethylene diamine
b22) m-xylylene diamine (mXD) or
b23) a C₄ to C₁₈ linear aliphatic diamine when b1) is a C₁₀ to C₁₂ linear aliphatic diamine and with b23) being a C₁₀ to C₁₈ diamine when said diamine b1) is a C₉ diamine,
b24) 1,3-bis (aminomethyl) cyclohexyl (1,3 BAC), 1,4-bis (aminomethyl) cyclohexyl (1,4 BAC) and a mixture thereof, particularly 1,3-bis (aminomethyl) cyclohexyl (1,3 BAC),
and
c) optionally, an amino acid or, as appropriate, the corresponding C₆ to C₁₂ lactam, preferably C₆, C₁₁ or C₁₂ lactam and more preferentially C₁₁ lactam, with c) representing no more than 30 mol% relative to a) or relative to b),
said method preferably being an RTM (resin transfer molding) method, in particular a c-RTM or RIM method, in particular s-RIM, more preferentially being an RTM method, in particular c-RTM.

2. The method according to claim 1, **characterized in that** it is an RTM (resin transfer molding) method.

3. The method according to claim 1 or 2, **characterized in that** it comprises an additional post-polymerization step.

4. The method according to one of claims 1 to 3, **characterized in that** said polyamide comprises b1), b2) and c) and that the molar ratio, in %, of c/ (b1+b2) ranges from 5 to 30% and preferably from 10 to 30%.

5. The method according to one of claims 1 to 4, **characterized in that** said polyamide comprises c) selected from 11-amino undecanoic acid or 12-amino lauric acid or lauryl lactam.

6. The method according to one of claims 1 to 5, **characterized in that** said polyamide has as components a) terephthalic acid, b1) 1,10-decamethylene diamine, b2) 1,6-hexamethylene diamine or 2-methyl pentamethylene diamine (MPMD) or mXD or 1,3 BAC or 1,4 BAC and c) 11-amino-undecanoic acid or 12-aminolauric acid or lauryl lactam.

7. The method according to one of claims 1 to 6, **characterized in that** said polyamide has as components a) terephthalic acid, b1) 1,10-decamethylene diamine, b2) 1,6-hexamethylene diamine and c) 11-aminoundecanoic acid.

8. The method according to one of claims 1 to 6, **characterized in that** said polyamide has as components a) terephthalic acid, b1) 1,10-decamethylene diamine, b2) 1,6-hexamethylene diamine and c) 12-aminoundecanoic acid.

9. The method according to one of claims 1 to 5, **characterized in that** b1) is 1,10-decamethylene diamine and b2) is chosen from 2-methyl pentamethylene diamine (MPMD) or mXD or 1,3 BAC or 1,4 BAC and a) is terephthalic acid.

10. The method according to one of claims 1 to 9, **characterized in that** the molar ratio of b1 / (b1+b2) ranges from 55 to 75% and that the molar ratio of b2 / (b1+b2) ranges from 25 to 45%.

11. The method according to one of claims 1 to 10, **characterized in that** said reactive precursor composition comprises at least one nanofiller of carbon origin selected from: carbon black, graphenes, carbon nanofibrils and carbon nanotubes, said nanofiller being added in previously dispersed form in the most fluid component.

12. The method according to one of claims 1 to 11, **characterized in that** it is a c-RTM (RTM with compression) method.

13. The method according to one of claims 1 to 12, **characterized in that** said precursor composition comprises in addition to said prepolymers an additive which absorbs radiation from a UV laser at a specific wavelength or from IR heating or from microwave heating or from induction heating for the purpose of reheating said composite, prior to a further processing operation, in particular by thermoforming or overmolding.

14. The method according to one of claims 1 to 13, **characterized in that** said fibers are selected from mineral fibers, preferably glass, carbon or basalt, in particular glass or carbon or from synthetics, preferably aramid or polyaryl ether ketone fibers.

15. The method according to one of claims 1 to 14, **characterized in that** it concerns the manufacture of a structural part said composite material.

16. The method according to claim 15, **characterized in that** said part is a part in the field of road, rail, maritime, aeronautical or aerospace transport or in mechanical engineering or in construction or in parks and recreation or to make a reinforcement of shields or protective panels against projectile impact.

17. The method according to one of claims 15 or 16, **characterized in that** said structural part is an automotive part, possibly inserted in a metal structure such as the body-in-white of a vehicle, possibly subjected to a thermochemical treatment cycle by cataphoresis.

18. A molded part of composite material, **characterized in that** it is obtained by a method as defined according to one of claims 1 to 17 or by using a precursor composition as defined according to claim 1 to 17.

19. The part according to claim 18, **characterized in that** it is a structural part in the field of automotive vehicles, road, rail, maritime, aeronautical or aerospace transport or in mechanical engineering or in construction or in parks and recreation or to make a reinforcement of shields or protective panels against projectile impact.
